# DEMANDE DE BREVET EUROPEEN

(11) **EP 0 887 943 A1**
(43) Date de publication de la demande: **30.12.1998**
(21) Numéro de dépôt: 98202026.5
(22) Date de dépôt: 17.06.1998
(51) Int. Cl.: H04B 1/16, H04M 1/72

(54) **Appareil téléphonique comportant une station de base et au moins un dispositif de combiné et procédé pour établir des périodes de veille pour un tel dispositif de combiné**

(30) Priorité: 26.06.1997 FR 9708034
(71) Demandeur: Koninklijke Philips Electronics N.V., 5621 BA Eindhoven (NL)
(72) Inventeur: Lorieau, Christopher, 75008 Paris (FR)
(74) Mandataire: Chaffraix, Jean

(57) **Abrégé**

Cet appareil téléphonique comporte une station de base (1) et une pluralité de dispositifs de combinés (HS1,HS2,...) reliés par plusieurs canaux radioélectriques à cette station de base (1).

Pour économiser les accumulateurs qui alimentent ces dispositifs de combiné (HS1,HS2,...), on met en état de veille le plus longtemps possible ces dispositifs: la période d'exploration des canaux étant d'autant plus espacée que ces canaux sont disposibles.

Application: téléphone répondant à la norme DECT.

## Description

L'invention concerne un appareil téléphonique comprenant :
- une station de base formée, entre autres, par :
   * une partie radioélectrique de base pour émettre et recevoir des informations sur une pluralité de canaux,
   * une ensemble à processeur de base comportant, entre autres, une mémoire morte contenant un programme d'exécution et une mémoire vive,
- au moins un dispositif de combiné formé par des éléments actifs et passifs en période veille, ces éléments formant, entre autres, :
   * une partie radioélectrique de combiné pour échanger des informations avec ladite station de base par l'intermédiaire de ladite pluralité de canaux,
   * un ensemble à processeur de combiné comportant, entre autres, une mémoire morte contenant un programme d'exécution et une mémoire vive,
   * des moyens de commande pour mettre en veille lesdits éléments passifs durant des périodes de veille,
   * des moyens d'exploration de canaux pour explorer, en dehors desdites périodes de veille, ledit ensemble de canaux déclenchés par une temporisation, pour définir des canaux disponibles,

L'invention concerne un dispositif de combiné et une station de base convenant à un tel appareil.

L'invention concerne aussi un procédé pour établir des périodes de veille dans un dispositif de combiné faisant partie d'un tel appareil.

L'invention trouve des applications importantes dans les appareils téléphoniques satisfaisant à la norme DECT. Elle présente aussi un intérêt pour les normes qui imposent une recherche de canaux disponibles d'une manière permanente de sorte qu'un canal disponible doit être trouvé rapidement sans que cela soit trop perceptible par l'utilisateur. Cependant, cette surveillance de canaux implique la mise en oeuvre de circuits électroniques qui consomment de l'énergie électrique et de ce fait réduit l'autonomie des dispositifs de combiné qui sont usuellement alimentés à partir d'accumulateur. En outre, les normes DECT imposent qu'une recherche de canaux a été effectuée dans les 30s avant qu'une demande de lien de canal, soit demandée.

La présente invention propose un appareil du genre décrit dans le préambule qui assure une meilleure gestion de l'analyse des canaux disponibles et procure ainsi aux dispositifs de combiné une meilleure autonomie.

Pour cela, un tel appareil est remarquable en ce qu'il
est prévu un variateur de durée de temporisation pour faire varier la durée de temporisation en fonction de la disponibilité desdits canaux.

L'idée de l'invention consiste à espacer l'exploration des canaux dès que le trafic est calme ou stable.

Une autre caractéristique de l'invention selon laquelle
il est prévu des moyens d'exploration réduite pour effectuer une exploration sur un nombre réduit de canaux, permet d'éviter un temps trop long pour l'utilisateur, lors d'une demande de lien. Cette exploration réduite tire profit des explorations effectuées précédemment.

La description suivante faite en regard des dessins ci-annexés, le tout donné à titre d'exemple non limitatif, fera bien comprendre comment l'invention peut être réalisée.
La figure 1 montre un appareil conforme à l'invention.
La figure 2 montre un organigramme explicitant le fonctionnement de l'appareil pour modifier la temporisation d'exploration.
La figure 3 montre un tableau élaboré durant la phase de fonctionnement illustré par l'organigramme de la figure 2.
La figure 4 montre un organigramme explicitant une exploration réduite des canaux dès qu'une demande de lien est effectuée.

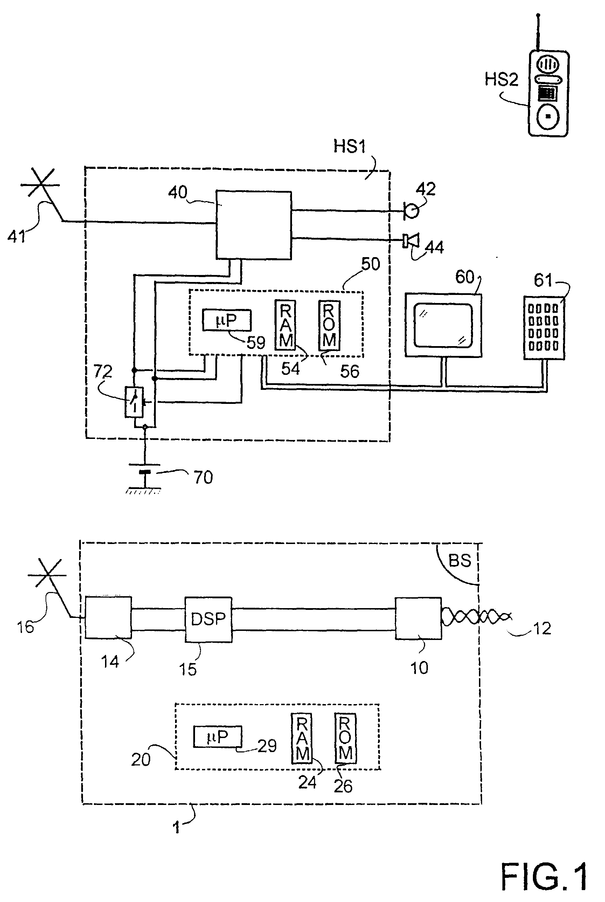

A la figure 1, l'appareil qui est représenté est un appareil répondant aux normes DECT. La référence 1 montre la station de base BS à laquelle peuvent être rattachés, par une voie radioélectrique formée de plusieurs canaux (CH1,...,CH120), une pluralité de dispositifs de combiné HS1, HS2, ... Cette station de base 1 comporte, entre autres, un circuit de ligne 10 qui lui permet d'être raccordé au réseau commuté via une ligne téléphonique 12 et un circuit radioélectrique 14 qui autorise le dialogue avec les différents combinés HS1, HS2,..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite les signaux vocaux notamment.

Tous les éléments de ce circuit de base 1 sont gérés par un ensemble à microprocesseur 20. Cet organe 20 est composé, notamment, de la façon usuelle, d'une mémoire vive 24, d'une mémoire morte 26 contenant les instructions de fonctionnement de l'appareil et d'un processeur de gestion 29.

Le dispositif de combiné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs de combiné HS2,.... Cet ensemble 40 traite les informations en provenance du microphone 42 et fournit aussi les signaux pour un haut-parleur 44. Il est prévu aussi un organe ou un ensemble de gestion 50 composé, tout comme l'organe de gestion 20, d'une mémoire vive 54, d'une mémoire morte 56 contenant les instructions de fonctionnement de l'appareil et d'un processeur de gestion 59. Le dispositif HS1 comporte aussi un écran 60 sur lequel différentes informations sont affichées et un clavier 61. Ces combinés sont des mobiles et de ce fait sont alimentés par un accumulateur 70. Le dispositif HS1 est formé d'éléments qui peuvent être mis dans un état de veille. C'est, dans cet état, qu'un minimum d'énergie est consommé. Pour illustrer cet état, on a représenté sur la figure 1 un interrupteur 72 branché sur un pôle de l'accumulateur 70. Ainsi, en mettant cet interrupteur en position ouverte, différents éléments contenus dans les différentes parties du combiné HS1 seront très peu alimentés ou pas du tout et sont donc considérés comme étant passifs en période de veille.

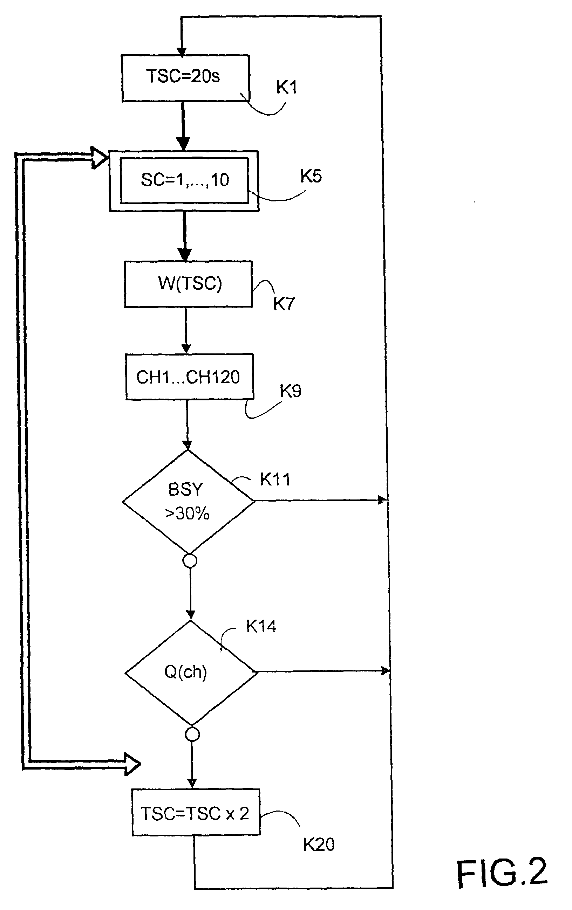

L'organigramme représenté à la figure 2 illustre le fonctionnement de l'appareil conformément à l'invention.

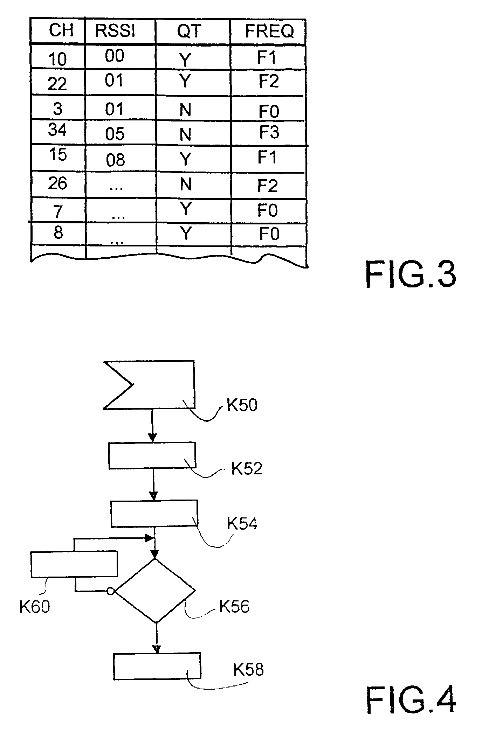

La case K1 représente une phase d'initialisation du temps de veille TSC qui est fixé à 20s. Ceci correspondait, dans les appareils de l'art antérieur, à la durée qu'imposaient pratiquement les normes DECT. Selon, l'invention cette durée va être incrémentée, lorsque les conditions sont bonnes, de sorte que ce temps de veille va être augmenté apportant ainsi des économies d'énergie à fournir par l'accumulateur 70. La case K5 indique qu'on va effectuer une succession de dix mesures (par exemple) RSSI définies par ladite norme DECT. Cette mesure consiste à mesurer la puissance des différents canaux, et de là, on peut estimer ceux qui sont libres. On va donc ainsi établir un tableau tel que montré à la figure 3 classe selon le niveau du RSSI. A chaque canal, on aura la valeur du champ RSSI, si ce canal est libre la valeur QT est "Y" sinon cette valeur est "N". De plus, la valeur (F1, F2,F3,...) de la fréquence FRQ sur laquelle le canal est véhiculé, se déduit du numéro du canal. Les canaux 0 à 9 sont transmis sur la fréquence F0, les canaux 10 à 19, sur la fréquence F1, les canaux 20 à 29 sur la fréquence F2 et.... . Cette analyse ne va être démarrée qu'après un temps égal à TSC (case K7). La case K9 indique le processus d'analyse proprement dit. A la suite de ce processus, Le nombre de canaux occupés et libres devient connu. Le nombre de canaux occupés est estimé à la case K11. Si le nombre de canaux occupés BSY est supérieur à 30% du nombre total des canaux, il est jugé que l'appareil est soumis à un trafic important et qu'il n'y a pas lieu de rallonger la période veille TSC, on retourne alors à la case K1. Sinon, on passe à la case K14 et l'on examine si les canaux libres sont les mêmes. S'il y a eu changement, on fait la même conclusion que ci-dessus et on retourne à la case K1. Si durant dix fois (par exemple), les tests des cases K11 et K14 sont satisfaisants la durée TSC est augmentée d'une façon substantielle : par exemple, elle est doublée comme indiqué à la case K20.

Selon un aspect de l'invention, dès que l'utilisateur manipule le clavier, pour satisfaire l'exigence précitée, on doit effectuer une exploration des canaux. L'invention propose, selon une manière préférentielle, d'effectuer une exploration réduite de ceux-ci en utilisant le tableau mis à jour lors de la dernière exploration. La figure 4 montre comment on peut donc effectuer cette exploration réduite. L'organigramme de cette figure 4 débute à la case K50 qui indique une demande de lien, ceci peut donc être fait lorsque l'utilisateur appuie sur une touche quelconque de son combiné, comme il a été déjà dit. La case K52 indique que l'on détermine la fréquence pour laquelle le nombre de canaux silencieux est le plus grand. On ne mesure alors le RSSI que sur les canaux véhiculés sur cette fréquence (case K54). Toujours sur cette même fréquence, on détermine le premier canal silencieux comme indiqué à la case K56. Si le canal est silencieux on va à la case K58 qui est la phase d'établissement du lien en utilisant un desdits canaux. Si le canal n'est pas silencieux, on va à la case K60 qui provoque l'analyse du canal suivant.

## Revendications

1. Appareil téléphonique comprenant :
- une station de base formée, entre autres, par :
* une partie radioélectrique de base pour émettre et recevoir des informations sur une pluralité de canaux,
* une ensemble à processeur de base comportant, entre autres, une mémoire morte contenant un programme d'exécution et une mémoire vive,
- au moins un dispositif de combiné formé par des éléments actifs et passifs en période veille, ces éléments formant entre autres :
* une partie radioélectrique de combiné pour échanger des informations avec ladite station de base par l'intermédiaire de ladite pluralité de canaux,
* un ensemble à processeur de combiné comportant, entre autres, une mémoire morte contenant un programme d'exécution et une mémoire vive,
* des moyens de commande pour mettre en veille lesdits éléments passifs durant des périodes de veille,
* des moyens d'exploration de canaux pour explorer, en dehors desdites période de veille, ledit ensemble de canaux déclenchés par une temporisation, pour définir des canaux disponibles,
caractérisé en ce qu'il est prévu un variateur de durée de temporisation pour faire varier la durée de temporisation en fonction de la disponibilité desdits canaux.

2. Appareil selon la revendication 1, caractérisé en ce que lorsqu'un lien est demandé, il est prévu des moyens d'exploration réduite pour effectuer une exploration sur un nombre réduit de canaux.

3. Appareil selon la revendication 1 ou 2 pour lequel les canaux sont véhiculés sur une pluralité de fréquences caractérisé en ce que les moyens d'exploration réduite opèrent sur les canaux d'une seule fréquence

4. Appareil selon la revendication 3 caractérisé en ce que ladite fréquence est choisie parmi celle qui contient le plus de canaux disponibles.

5. Appareil selon l'une des revendications 1 à 4 caractérisé en ce qu'il satisfait à la norme DECT.

6. Dispositif de combiné convenant à un appareil selon l'une des revendications 1 à 5, comprenant :
* une partie radioélectrique de combiné pour échanger des informations avec ladite station de base par l'intermédiaire de ladite pluralité de canaux,
* un écran de visualisation,
* un ensemble à processeur de combiné comportant, entre autres, une mémoire morte contenant un programme d'exécution et une mémoire vive,
* des moyens de commande pour mettre en veille lesdits éléments passifs durant des périodes de veille,
* des moyens d'exploration de canaux pour explorer, en dehors desdites période de veille, ledit ensemble de canaux déclenchés par une temporisation, pour définir des canaux disponibles,
caractérisé en ce qu'il est prévu un variateur de durée de temporisation pour faire varier la durée de temporisation en fonction de la disponibilité desdits canaux.

7. Dispositif de combiné selon la revendication 6, caractérisé en ce que lorsqu'un lien est demandé, il est prévu des moyens d'exploration réduite pour effectuer une exploration sur un nombre réduit de canaux.

8. Dispositif de combiné selon la revendication 6 ou 7 pour lequel les canaux sont véhiculés sur une pluralité de fréquences caractérisé en ce que les moyens d'exploration réduite opèrent sur les canaux d'une seule fréquence

9. Dispositif de combiné selon la revendication 3 caractérisé en ce que ladite fréquence est choisie parmi celle qui contient le plus de canaux disponibles.

10. Station de base convenant à un appareil selon l'une des revendications 1 à 5.

11. Procédé pour établir des période de veille dans un dispositif de combiné faisant partie d'un appareil selon l'une des revendications 1 à 5 caractérisé en ce que les périodes de veille sont augmentées en fonction d'une exploration des canaux indiquant une stabilité de leur occupation.
